# EUROPEAN PATENT SPECIFICATION

(11) **EP 3 978 291 B1**
(45) Date of publication and mention of the grant of the patent: **17.01.2024**
(21) Application number: 21173038.7
(22) Date of filing: 10.05.2021
(51) Int. Cl.: B60K 35/00, B60K 37/06, B60K 37/02, B60K 37/04

(54) **DISPLAY SYSTEM AND VEHICLE**
ANZEIGESYSTEM UND FAHRZEUG
SYSTÈME D'AFFICHAGE ET VÉHICULE

(30) Priority: 30.09.2020 JP 2020166175
(43) Date of publication of application: 06.04.2022
(73) Proprietor: Yamaha Hatsudoki Kabushiki Kaisha, Iwata-shi, Shizuoka 438-8501 (JP)
(72) Inventor: SUGIYAMA, Yuichi, Shizuoka, 438-8501 (JP)
(74) Representative: Grünecker Patent- und Rechtsanwälte PartG mbB

(56) References cited:
- JP-A- 2017 171 277
- US-A1- 2017 334 500
- US-A1- 2019 210 683

## Description

The present invention relates to a display system according to the preamble of the independent claim 1. Such a display system can be taken from the prior art document US 2019/210683 A1.

Moreover, the prior art document US 2017/0334500 A1 discloses systems and methods to present information to recreational vehicle riders and to provide customizable visual information to recreational vehicle riders. Said systems and methods are provided to connect and transmit audio information between a driver portable communication device and a driver audio interface device through the recreational vehicle and audio information between a passenger portable communication device and a passenger audio interface device. The system can be controlled, for example, by a plurality of buttons arranged on a handlebar of the vehicle.

JP-A-2017-171277 discloses a motorcycle display system in which a motorcycle is equipped with a display unit on which infotainment information is displayed and an analog meter unit on which vehicle running information is displayed.

Incidentally, in the motorcycle display system disclosed in JP-A-2017-171277, since the meter unit and the display unit are installed separately in the vehicle, the rider needs to move his or her line of sight to a large extent in checking both of infotainment information and vehicle running information. As such, this display system has room for improvement in terms of its usability.

It is an object of the present invention to provide a display system that can increase the usability thereof. According to the present invention said object is solved by display system having the features of independent claim 1. Preferred embodiments are laid down in the dependent claims.

According to one or more aspects of the present invention, there is provided a display system which is to be installed in a straddled vehicle. The display system includes: a display unit; and a communication unit which is communicably connected to a portable terminal. The display system is configured to: change information displayed on the display unit in response to a short press operation performed by a rider on a first switch, wherein the first switch is provided in a handle switch and is used to operate the display unit; switch a display mode of the display unit from a first display mode to a second display mode or from the second display mode to the first display mode in response to one long press operation performed by the rider on the first switch; display a meter display picture representing running information of the vehicle on the display unit in the first display mode; and display running information of the vehicle in a first display area of the display unit and display infotainment information transmitted from the portable terminal in a second display area of the display unit in the second display mode, and wherein the meter display picture is larger in area than the first display area.

In this configuration, the display mode of the display unit is switched from the first display mode to the second display mode or from the second display mode to the first display mode in response to one long press operation performed by the rider on the first switch. Since the rider can switch between display and non-display of infotainment information by such a simple and intuitive switch operation, the usability of the display system can be increased. Furthermore, since it is not necessary to provide the handle switch with another switch dedicated to switching the display mode from the first display mode to the second display mode, size increase of the handle switch can be suppressed and the operability of the display system can be increased.

The second display area may be larger than the first display area.

This measure increases the visibility of infotainment information.

At least a portion of the first display area may be located over the second display area in a vertical direction of the display unit.

This measure makes it possible to reduce a movement of the line of sight of the rider in a case that the rider is to visually recognize both of infotainment information and running information.

The first display area may surround the second display area.

This measure increases the visibility of infotainment information and running information.

A speed display region of the meter display picture, where speed information of the vehicle is displayed, may be the same in a display position in a horizontal direction of the display unit as a speed display region of the first display area, where speed information of the vehicle (1) is displayed.

This measure allows the rider to recognize running information of the vehicle without feeling strange when the display mode of the display unit is switched from the first display mode to the second display mode.

The infotainment information may include at least one of map information, musical information, message information, and weather information.

This measure allows the rider to switch between display and non-display of map information, musical information, message information, or weather information by a simple and intuitive switch operation.

The display system may display communication error information in the second display area when the display system cannot communicate with the portable terminal.

This measure allows the rider to immediately recognize trouble in a communication between the display system and the portable terminal by seeing the communication error information.

The display system may be configured by a meter display device and a communication device which are separated from each other. The meter display device may comprise the display unit. The communication device may comprise the communication unit and an image transmission unit configured to send image data to be displayed in the second display area to the display unit. The meter display device and the communication device may be physically connected to each other by a video signal cable.

In this configuration, the display system is configured by the meter display device and the communication device, which are separate devices and are connected to each other physically by the video signal cable (e.g., LVDS cable). As a result, the degree of freedom of designing of the vehicle that is equipped with the display system is increased and a good communication connectivity environment can be secured between the communication system and the portable terminal.

There is provided a straddle vehicle including the display system.

### BRIEF DESCRIPTION OF DRAWINGS

Fig. 1 is a view showing a front portion of a straddled vehicle which is equipped with a display system according to an embodiment of the invention;
Fig. 2 is a system configuration diagram of the straddled vehicle including the display system according to the embodiment;
Fig. 3 is a rough diagram illustrating an example configuration of a handle switch;
Fig. 4 shows an example of a meter display picture displayed on the screen of a display unit;
Fig. 5 shows an example of a meter display picture and a launcher display picture displayed on the screen of the display unit;
Fig. 6 shows an example of a display picture displayed on the screen of the display unit and representing vehicle running information and map information;
Fig. 7 shows an example of a display picture displayed on the screen of the display unit and representing vehicle running information and musical information; and
Fig. 8 shows an example of a display picture displayed on the screen of the display unit and representing vehicle running information and connection error information.

### DETAILED DESCRIPTION OF EMBODIMENT

An embodiment of the presently disclosed subject matter will be hereinafter described with reference to the drawings. For convenience of description, dimensions of each of members shown in the drawings may be different from those of an actual member.

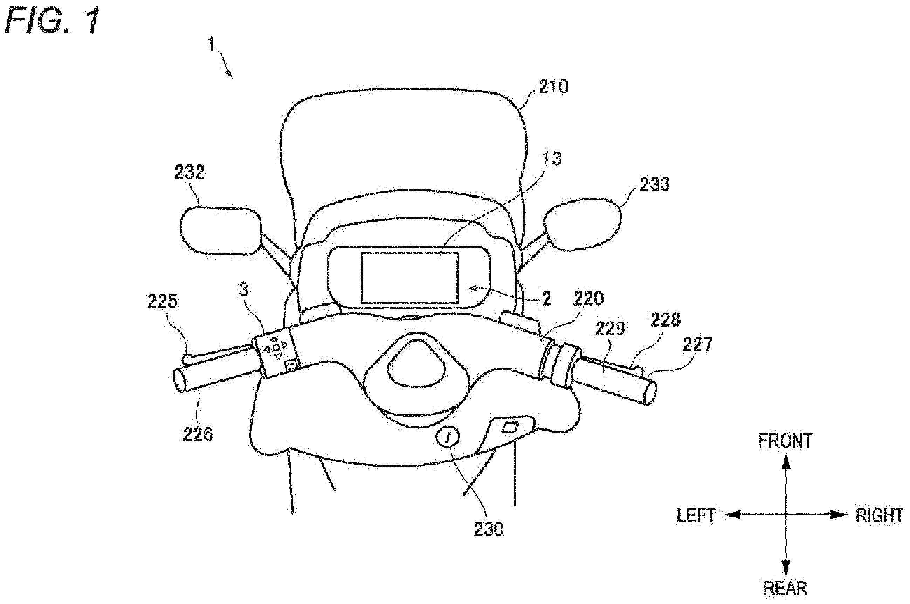

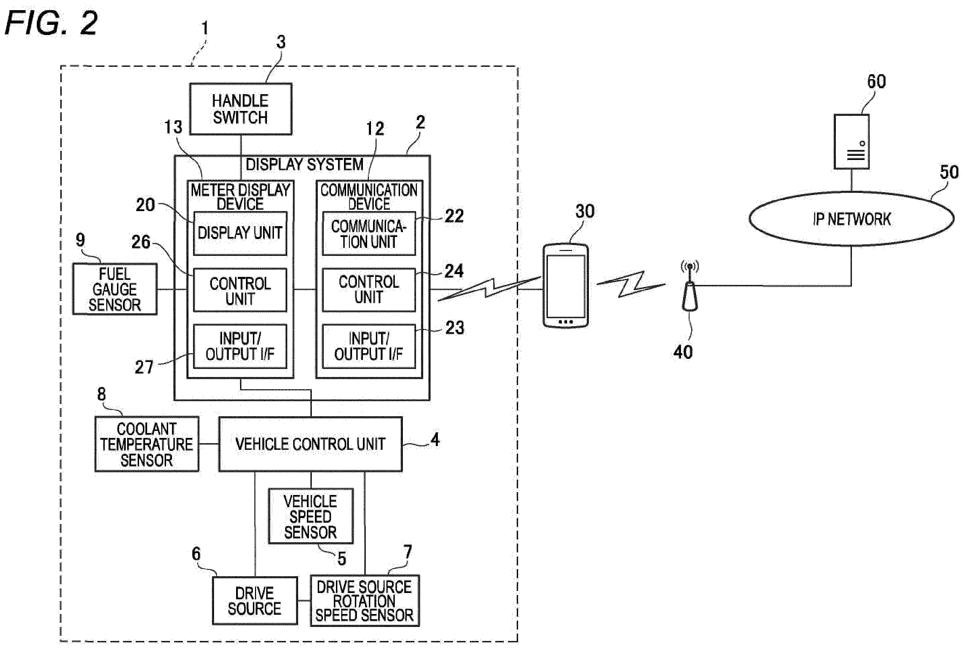

First, the configuration of a straddled vehicle 1 (hereinafter simply referred to as a "vehicle 1") which is equipped with a display system 2 according to the embodiment will be described with reference to Figs. 1 and 2. Fig. 1 is a view showing a front portion of the vehicle 1 which is equipped with the display system 2. Fig. 2 is a system configuration diagram of the vehicle 1 including the display system 2.

As shown in Fig. 1, the vehicle 1 is, for example, a motorcycle that can turn when the rider inclines the vehicle body. The vehicle 1 is equipped with the display system 2 for presenting running information of the vehicle 1 and infotainment information to the rider. The display system 2 includes a meter display device 13. The meter display device 13 is disposed between a windscreen 210 and a handlebar 220 in the front-rear direction of the vehicle 1 and between a left side mirror 232 and a right side mirror 233 in the left-right direction of the vehicle 1.

The handlebar 220 has a left handle 226 and a right handle 227. The left handle 226 is equipped with a handle switch 3 and a brake lever 225. The right handle 227 is equipped with a throttle grip 229 which functions as an accelerator and a brake lever 228. A main switch key unit 230 for turning on or off driving of the vehicle 1 is provided below the handlebar 220.

Although the vehicle 1 shown in Fig. 1 is a scooter-type motorcycle, the vehicle 1 is not limited thereto, that is, the vehicle 1 may be a motorcycle of another type. Furthermore, the vehicle 1 is not limited to a two-wheel motorcycle and may be a saddle-type three-wheel or four-wheel vehicle.

Next, the system configuration of the vehicle 1 will be described with reference to Fig. 2. For convenience of description, Fig. 2 shows only part of the constituent elements of the vehicle 1. As shown in Fig. 2, the vehicle 1 includes the display system 2, the handle switch 3, a vehicle control unit 4, a vehicle speed sensor 5, a drive source 6, a drive source rotation speed sensor 7, a coolant temperature sensor 8, and a fuel gauge sensor 9.

The display system 2 is configured to display running information (e.g., speed information etc.) of the vehicle 1 after receiving running information data of the vehicle 1 from the vehicle control unit 4. Furthermore, the display system 2 is configured to receive infotainment information from a portable terminal 30 being carried by the rider and to display the received infotainment information. The display system 2 may be configured to transmit, to the portable terminal 30, running information data of the vehicle 1 received from the vehicle control unit 4. The display system 2 may be connected to the portable terminal 30 so as to be able to communicate with it according to such a standard as SDL (Smart Device Link; registered trademark).

The display system 2 includes a communication device 12 and a meter display device 13. The communication device 12 and the meter display device 13 are separate from each other and are connected to each other physically by a video signal cable for transmitting a video signal, such as an LVDS cable. The communication device 12 is installed at a prescribed location of the vehicle 1 and includes a communication unit 22, an input/output interface 23, and a control unit 24.

The communication unit 22 is communicably connected to the portable terminal 30. For example, the communication unit 22 may be a wireless communication unit that is communicably connected to the portable terminal 30 by radio. The wireless communication unit may include a radio frequency circuit (RF circuit) and a transmission/reception antenna and connected to the portable terminal 30 according to a wireless communication standard such as WiFi (registered trademark) or Bluetooth (registered trademark). The communication unit 22 may be connected to the portable terminal 30 by a cable such as a USB cable.

The portable terminal 30 is, for example, a smartphone, a cellphone, or a wearable device. The portable terminal 30 is communicably connected to a wireless base station 40 by radio. More specifically, the portable terminal 30 may include a SIM card for data communication and connected to a wireless base station 40 so as to be able to communicate with it via a fourth-generation (4G) or fifth-generation (5G) mobile communication system. The portable terminal 30 is connected to an external server 60 via a wireless base station 40, a core network (not shown) for portable terminals, and an IP (Internet Protocol) network 50. For example, the portable terminal 30 may receive infotainment information (e.g., map information, musical information, message information, or weather information) and transmit the received infotainment information to the display system 2. On the other hand, the portable terminal 30 may receive running information of the vehicle 1 from the display system 2 and transmit the received running information of the vehicle 1 to the external server 60. The portable terminal 30 may include a GPS (Global Positioning System) device for receiving current position information of the portable terminal 30. The portable terminal 30 may transmit, to the display system 2, map information received from the external server 60 and current position information acquired by the GPS device.

The input/output interface 23 is configured to connect the communication device 12 and the meter display device 13. For example, the input/output interface 23 has a terminal into which a video signal cable such as an LVDS cable is inserted.

The control unit 24 is configured to control the individual elements of the communication device 12. The control unit 24 includes a computer system including one or more processors and one or more memories and an electronic circuit configured by active elements and passive elements. For example, the processor includes at least one of a CPU (central processing unit), an MPU (micro processing unit), and a GPU (graphic processing unit). The memory or memories include a ROM (read-only memory) and a RAM (random access memory). The RAM may include a VRAM (video RAM). The ROM may include a flash memory. The processor may be configured to develop control programs stored in the ROM on the RAM and to execute various kinds of processing by cooperating with the RAM. The computer system may include an ASIC (application-specific integrated circuit) or an FPGA (field-programmable gate array).

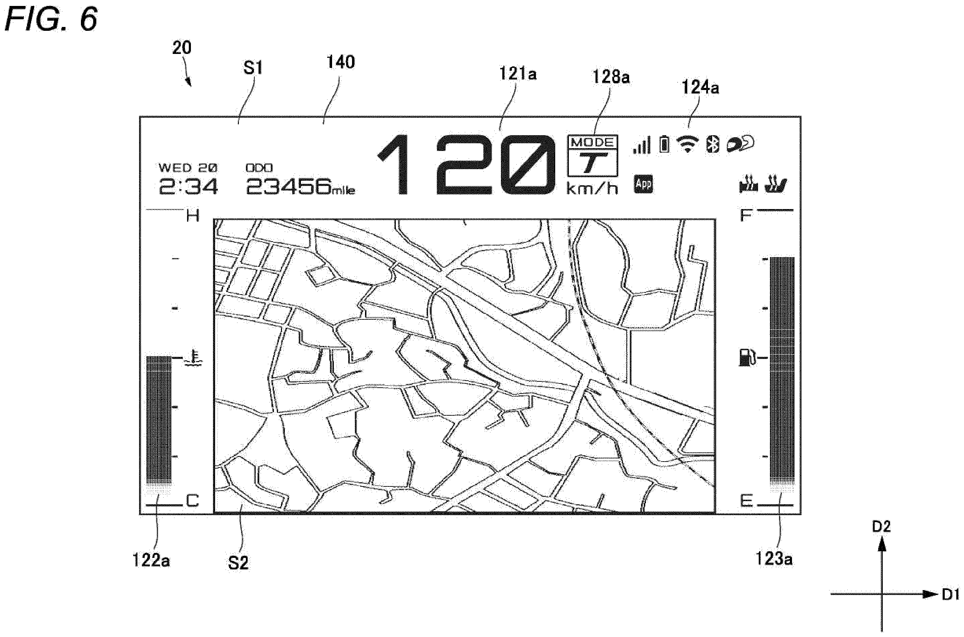

The control unit 24 receives infotainment information from the portable terminal 30 and sends the received infotainment information to the meter display device 13. More specifically, in case where the display mode of the display system 2 is a projection mode, the control unit 24 sends image data received from the portable terminal 30 to the meter display device 13. The image data is then displayed on the display unit 20 of the meter display device 13. In this situation, the control unit 24 may adjust the image data received from the portable terminal 30 and sends the adjusted image data to the meter display device 13. On the other hand, in case where the display mode of the display system 2 is a template mode, the control unit 24 generates image data on the basis of infotainment information received from the portable terminal 30 and template image data stored in the memory and sends the generated image data to the meter display device 13. The image data is then displayed on the display unit 20. In particular, as described later, the image data received from the communication device 12 is displayed in a second display area S2 (see Fig. 6) on the screen of the display unit 20. In the embodiment, the control unit 24 functions as an image transmission unit for sending image data to the meter display device 13.

The meter display device 13 includes the display unit 20, an input/output interface 27, and a control unit 26. As described above, the meter display device 13 is disposed in a front portion of the vehicle 1. The display unit 20 is configured to display, on its screen, a display picture representing running information of the vehicle 1 and/or infotainment information transmitted from the portable terminal 30. For example, the display unit 20 is a liquid crystal display or an organic EL display.

The input/output interface 27 is configured to connect the meter display device 13 and external devices (e.g., the handle switch 3, the vehicle control unit 4, and the communication device 12). For example, the input/output interface 27 has a terminal into which a communication cable such as a CAN cable for connecting the vehicle control unit 4 and the meter display device 13 physically is inserted. The input/output interface 27 also has a terminal into which a video signal cable (e.g., LDVS cable) for connecting the meter display device 13 and the communication device 12 physically is inserted.

The control unit 26 is configured to control the individual elements of the meter display device 13. The control unit 26 includes a computer system including one or more processors and one or more memories and an electronic circuit configured by active elements and passive elements. For example, the processor includes at least one of a CPU, an MPU, and a GPU. The memory include a ROM and a RAM. For example, the control unit 26 receives running information of the vehicle 1 from the vehicle control unit 4 and displays a meter display picture representing the received running information on the display unit 20.

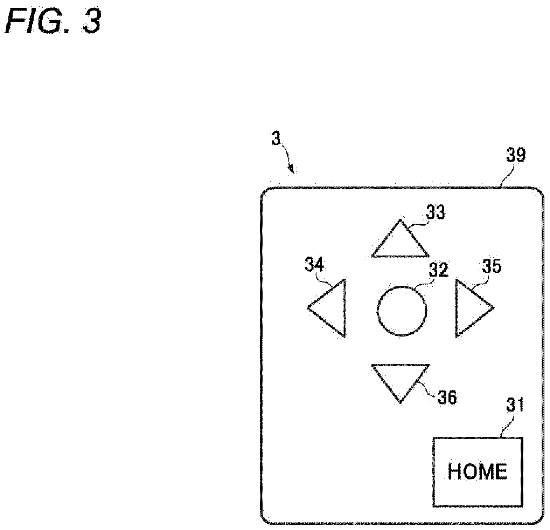

The handle switch 3, which is provided on the left handle 226, is configured to generate an operation signal corresponding to an operation of the rider and to send the generated operation signal to the control unit 26 via the input/output interface 27. As shown in Fig. 3, the handle switch 3 may have a housing 39, a home button 31, an enter button 32, a leftward button 34, a rightward button 35, an upward button 33, and a downward button 36. It is noted that the configuration of the handle switch 3 shown in Fig. 3 is an example.

The vehicle control unit 4 is configured to control running of the vehicle 1. In particular, the vehicle control unit 4 is configured to control the drive source 6 on the basis of an accelerator operation signal or a brake operation signal that is output from an HMI (human machine interface) such as a throttle grip or a brake lever. For example, the vehicle control unit 4 is configured by at least one electronic control unit (ECU). The ECU may include a computer system including one or more processors and one or more memories and an electronic circuit configured by active elements and passive elements. The vehicle control unit 4 is configured to send detection signals that are output from various sensors installed in the vehicle 1 to the meter display device 13 via a CAN communication cable.

The vehicle speed sensor 5 is configured to detect a speed of the vehicle 1 and to send a detection signal indicating the detected speed of the vehicle 1 to the vehicle control unit 4. The drive source rotation speed sensor 7 is configured to detect a rotation speed of the drive source 6 and to send a detection signal indicating the detected rotation speed of the drive source 6 to the vehicle control unit 4. The drive source 6 is configured to generate drive power for the vehicle 1 and is an engine and/or a motor.

The coolant temperature sensor 8 is configured to detect the temperature of coolant for cooling the drive source 6 and to send a detection signal indicating the detected temperature of the coolant to the vehicle control unit 4. Where the drive source 6 is not a water-cooled engine, the vehicle 1 need not be equipped with the coolant temperature sensor 8. In this case, the vehicle 1 may be equipped with an engine temperature sensor that is configured to detect an engine temperature in place of the coolant temperature sensor 8. The fuel gauge sensor 9 is configured to detect a residual fuel amount (e.g., a residual amount of gasoline) for the drive source 6 and to send a detection signal indicating the detected residual fuel amount to the meter display device 13. In case where the drive source 6 is a motor, the vehicle 1 may be equipped with a residual battery energy sensor for detecting residual battery energy in place of the fuel gauge sensor 9.

### (Meter display picture 100 and launcher display picture 130)

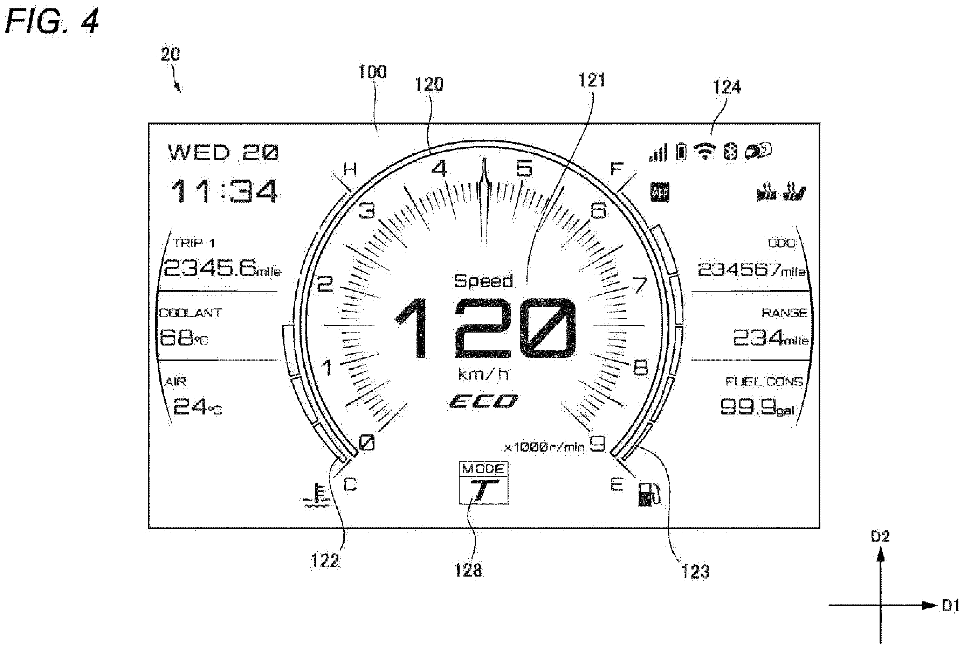

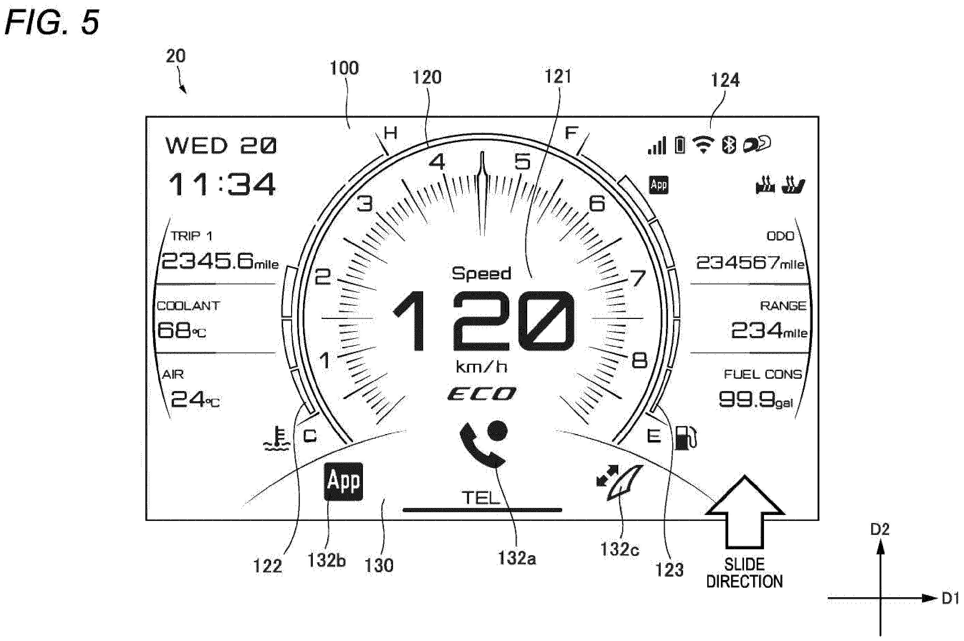

Next, a meter display picture 100 and a launcher display picture 130 to be displayed on the display unit 20 will be described below with reference to Figs. 4 and 5. Fig. 4 shows an example of the meter display picture 100 displayed on the screen of the display unit 20. Fig. 5 shows an example of the meter display picture 100 and the launcher display picture 130 displayed on the screen of the display unit 20.

In the following description, reference may be made to a horizontal (first) direction D1 and a vertical (second) direction D2 of the screen of the display unit 20 when necessary. It is assumed that the horizontal direction D1 and the vertical direction D2 are perpendicular to each other. The horizontal direction D1 and the vertical direction D2 of the screen of the display unit 20 refers to the view of the rider sitting on the straddled vehicle. The horizontal direction D1 may be either parallel with or not parallel with the left-right direction of the vehicle 1 (see Fig. 1).

First, a description will be made of the meter display picture 100 shown in Fig. 4. The meter display picture 100 is an initial picture to be displayed on the display unit 20. The meter display device 13 displays, on the display unit 20, as the initial picture, the meter display picture 100 representing running information (e.g., vehicle speed information and rotation speed information of the drive source 6) of the vehicle 1. As shown in Fig. 4, a speedometer 121 indicating speed information of the vehicle 1 and a tachometer 120 indicating a rotation speed of the drive source 6 are displayed in the meter display picture 100.

A coolant temperature meter 122 indicating a temperature of coolant, a residual fuel meter 123 indicating a residual fuel amount for the drive source 6, and a drive mode display mark 128 indicating a drive mode of the vehicle 1 are further displayed in the meter display picture 100. Plural status bar icons 124 may be displayed in the meter display picture 100. As shown in Fig. 4, the status bar icons 124 may include information (e.g., a communication state of the portable terminal 30 and residual battery energy) relating to the portable terminal 30 connected to the display system 2.

Although as shown in Fig. 4 other meters such as an odometer indicating a running distance of the vehicle 1 are displayed in the meter display picture 100, descriptions of those meters will be omitted here.

If the rider pushes the home button 31 (an example of the term "first switch") once for a short time, as shown in Fig. 5, the meter display picture 100 and the launcher display picture 130 are displayed on the screen of the display unit 20. That is, the meter display device 13 switches the display mode of the display unit 20 from a display mode in which a meter display picture 100 is displayed (see Fig. 4) to a display mode in which a meter display picture 100 and a launcher display picture are displayed (see Fig. 5) in response to one short press operation performed on the home button 31 by the rider. In this manner, information to be displayed on the display unit 20 is switched in response to a short press operation made on the home button 31 by the rider.

When a launcher display picture 130 is displayed on the display unit 20, it may be slid into a meter display picture 100 in the vertical direction D2. If the rider pushes the home button 31 again for a short time in a state that a meter display picture 100 and a launcher display picture 130 are displayed on the display unit 20, the display mode of the display unit 20 is switched from the display mode shown in Fig. 5 to that shown in Fig. 4. In this case, the launcher display picture 130 may be slid out from the meter display picture 100 in the vertical direction D2. Furthermore, if the handle switch 3 has not been operated by the rider for a prescribed period (e.g., 5 sec) in a state that a meter display picture 100 and a launcher display picture 130 are displayed on the display unit 20, the display mode of the display unit 20 may be switched from the display mode shown in Fig. 5 to that shown in Fig. 4.

As shown in Fig. 5, three icons are displayed in the launcher display picture 130 so as to be arranged in the circumferential direction (an example of the term "prescribed direction"). Each of plural icons displayed in the launcher display picture 130 is correlated with a function of the portable terminal 30 or a function of the vehicle 1. That is, the plural icons displayed in the launcher display picture 130 are correlated with different functions.

More specifically, in the launcher display picture 130 shown in Fig. 5, three icons 132a-132c are arranged in the circumferential direction. The icon 132a is an icon relating to the telephone function of the portable terminal 30. The icon 132b is an icon relating to information of applications installed in the memory of the portable terminal 30. The icon 132c is an icon relating to the height adjustment of the windscreen 210 (see Fig. 1) of the vehicle 1. For example, if the enter button 32 of the handle switch 3 is operated by the rider in a state that the icon 132a is selected as shown in Fig. 5, a display picture indicating information relating to the telephone function of the portable terminal 30 is displayed on the screen of the display unit 20. If the upward button 33 of the handle switch 3 is operated by the rider in a state that the icon 132b (see Fig. 5) is selected, the windscreen 210 can be elevated. On the other hand, if the downward button 36 of the handle switch 3 is operated by the rider in a state that the icon 132c is selected, the windscreen 210 can be lowered.

If the rightward button 35 of the handle switch 3 is pressed by the rider in a state that the icon 132a is selected currently, the icon selected by the rider currently is switched from the icon 132a to the icon 132c. In this case, the icons displayed in the launcher display picture 130 are moved counterclockwise in the circumferential direction. In particular, whereas the icon 132b shown in Fig. 5 is slid out from the launcher display picture 130, an icon (not shown) that is adjacent to the icon 132c on the right side is slid into the launcher display picture 130. Furthermore, the icon 132c that has been newly selected by the rider comes to be located at the center of the launcher display picture 130 in the horizontal direction D1.

### (Meter/infotainment display picture 140)

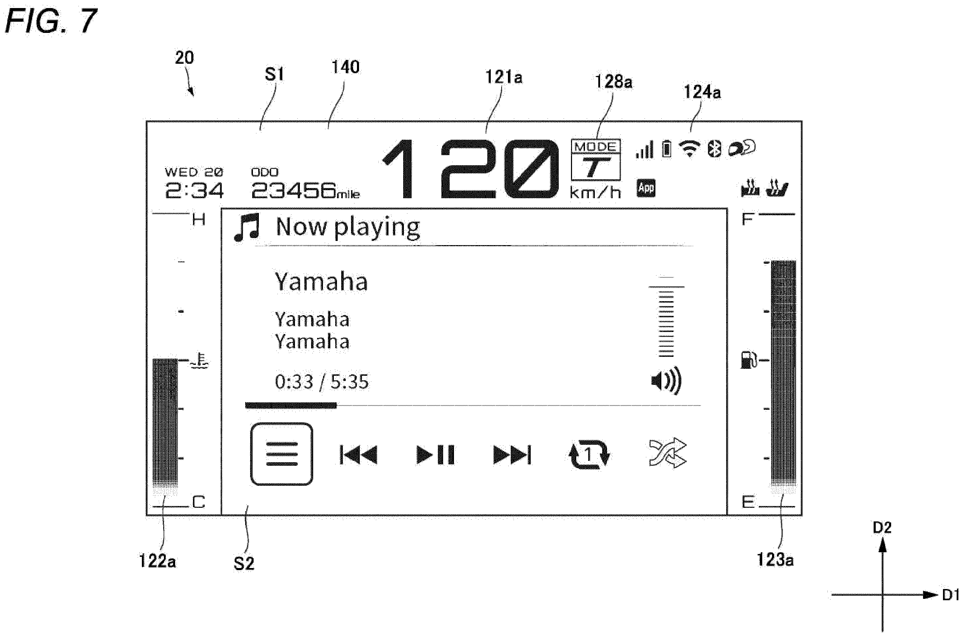

Next, a meters/infotainment display picture 140 will be described below with reference to Figs. 4, 6, and 7. Fig. 6 shows an example of the meter/infotainment display picture 140 (hereinafter simply referred to as a "display picture 140") displayed on the screen of the display unit 20 and representing vehicle running information and map information. Fig. 7 shows another example of the meter/infotainment display picture 140 displayed on the screen of the display unit 20 and representing vehicle running information and musical information.

If the rider presses the home button 31 of the handle switch once for a long time, as shown in Fig. 6 a display picture 140 is displayed on the screen of the display unit 20. That is, the display system 2 switches the display mode of the display unit 20 from a first display mode in which a meter display picture 100 is displayed (see Fig. 4) to a second display mode (see Fig. 6) in response to one long press operation performed by the rider on the home button 31. The period of a long press operation is 1 sec, for example.

As shown in Fig. 6, in the second display mode, the display area of the display picture 140 (or the display unit 20) is divided into a first display area S1 and a second display area S2. Running information of the vehicle 1 is displayed in the first display area S1. More specifically, a speedometer 121a, a coolant temperature meter 122a, a residual fuel meter 123a, a drive mode display mark 128a, and plural status bar icons 124a are displayed in the first display area S1. On the other hand, no tachometer is displayed in the first display area S1.

Infotainment information transmitted from the portable terminal 30 is displayed in the second display area S2. For example, the infotainment information includes at least one of map information, musical information, message information, and weather information. The map information may include information representing a map of an area around a current position of the vehicle 1. Such map information may include information representing a map of an area around a current position of the vehicle 1, information indicating the current position of the vehicle 1, and navigation information for guiding the vehicle 1 to a destination (e.g., information indicating a running route of the vehicle 1). The musical information includes information indicating a play list of musical pieces that can be reproduced and/or information relating to a musical piece being reproduced. The message information is information relating to a message received by the portable terminal 30. For example, the message information is a message transmitted by an SNS (social networking service) such as LINE (registered trademark), Facebook (registered trademark), or Twitter (registered trademark). The message information may be a message transmitted by an application service other than an SNS. The weather information may include information relating to weather of an area around a current position of the vehicle 1. In the example shown in Fig. 6, map information is displayed in the second display area S2. In the example shown in Fig. 7, musical information relating to a musical piece being reproduced is displayed in the second display area S2.

A procedure according to which the display mode of the display unit 20 is switched from the first display mode to the second display mode in response to a long press operation on the home button 31 performed by the rider will be described below.

First, when the home button 31 is pressed by the rider for a long time, the handle switch 3 sends an operation signal corresponding to the long press of the home button 31 to the meter display device 13. In response to the operation signal received from the handle switch 3, the meter display device 13 transmits, to the portable terminal 30, via the communication device 12, a request signal for requesting the portable terminal 30 to send back infotainment information such as map information. Then the portable terminal 30 acquires infotainment information from the external server 60 on the IP network 50 according to the received request signal and transmits the acquired infotainment information to the communication device 12. In case where the infotainment information includes map image data and the display mode of the display system 2 is the projection mode, the communication device 12 sends the map image data received from the portable terminal 30 to the meter display device 13. Subsequently, the meter display device 13 displays running information of the vehicle 1 in the first display area S1 and displays the map image data received from the communication device 12 in the second display area S2. In this manner, a display picture 140 is displayed on the screen of the display unit 20. The map image data displayed in the second display area S2 is updated whenever the current position of the vehicle 1 is changed.

Incidentally, the portable terminal 30 need not always acquire infotainment information from the external server 60 in response to a request signal received from the meter display device 13. That is, the portable terminal 30 may transmit infotainment information (e.g., map information) stored in its memory to the communication device 12. Furthermore, the communication device 12 may adjust the size of map image data received from the portable terminal 30 and send size-adjusted map image data to the meter display device 13.

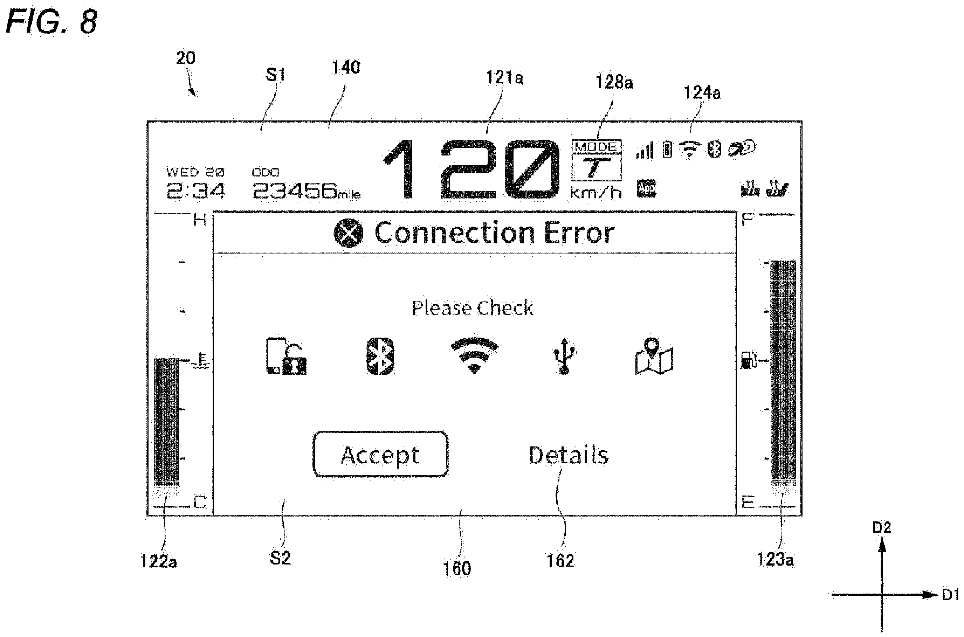

If the display system 2 cannot communicate with the portable terminal 30, as shown in Fig. 8, the display system 2 may display a communication error display picture 160 representing communication error information in the second display area S2 of a display picture 140. In particular, if the communication device 12 cannot receive infotainment information from the portable terminal 30, the communication device 12 may send image data of the communication error display picture 160 to the meter display device 13. Furthermore, the rider may be allowed to acquire information indicating a cause of the communication error by selecting a details button 162 displayed in the communication error display picture 160.

The meter display picture 100 shown in Fig. 4 is larger than the first display area S1 of the display picture 140 shown in Fig. 6. Furthermore, the second display area S2 is larger than the first display area S1. This increases the visibility of infotainment information.

A portion of the first display area S1 in which the speedometer 121a is displayed is located over the second display area S2 in the vertical direction of the display unit 20. This makes it possible to reduce a movement of the line of sight of the rider in a case that the rider is to visually recognize both of infotainment information and running information (in particular, speed information). Furthermore, the first display area S1 surrounds the second display area S2. In particular, the second display area S2 is located between the coolant temperature meter 122a and the residual fuel meter 123a in the horizontal direction D1. As a result, both of infotainment information and running information are increased in visibility.

The display position, in the horizontal direction D1 of the display unit 20, of the speedometer 121a in the display picture 140 shown in Fig. 6 is the same as that of the speedometer 121 in the display picture 100 shown in Fig. 4. This allows the rider to recognize the speedometer 121a without feeling strange when the display mode of the display unit 20 is switched from the first display mode shown in Fig. 4 to the second display mode shown in Fig. 6.

When the rider makes a long press operation again on the home button 31 in a state that the display mode of the display unit 20 is the second display mode, the display mode of the display unit 20 is switched from the second display mode shown in Fig. 6 to the first display mode shown in Fig. 4. That is, the display system 2 switches the display mode of the display unit 20 from the first display mode to the second display mode or from the second display mode to the first display mode in response to one long press operation made by the rider on the home button 31.

In the embodiment, the display mode of the display unit 20 is switched from the first display mode to the second display mode or from the second display mode to the first display mode in response to one long press operation on the home button 31. Since the rider can switch between display and non-display of infotainment information by such a simple and intuitive switch operation, the usability of the display system 2 can be increased. Furthermore, in the embodiment, whereas a launcher display picture 130 can be displayed on the screen of the display unit 20 in response to a short press operation on the home button 31, a display picture 140 can be displayed on the screen of the display unit 20 in response to a long press operation on the home button 31. In this manner, one of two different display pictures, that is, a launcher display picture 130 and a display picture 140, can be displayed on the display unit 20 by a short press operation or a long press operation on the single home button 31. Since it is not necessary to provide the handle switch 3 with another switch dedicated to switching the display mode of the display unit 20 to the first display mode or the second display mode, size increase of the handle switch 3 can be suppressed and the rider operability of the display system 2 can be increased further.

In the embodiment, since infotainment information displayed in the second display area S2 of a display picture 140 includes at least one of map information, musical information, message information, and weather information, the rider can switch between display and non-display of map information, musical information, message information, or weather information by a simple and intuitive operation on the handle switch 3.

Since a communication error display picture 160 is displayed in the second display area S2 when the display system 2 cannot communicate with the portable terminal 30, the rider can immediately recognize trouble in a communication between the display system 2 and the portable terminal 30 by seeing the communication error display picture 160.

Furthermore, in the embodiment, the display system 2 is configured by the meter display device 13 and the communication device 12 which are separate devices. As a result, the degree of freedom of designing of the vehicle 1 that is equipped with the display system 2 is made higher than in a case that the display system 2 is a single module. Moreover, since the degree of freedom in determining a location of the communication device 12 is increased, the communication device 12 can be disposed at a position where a good wireless communication environment can be secured between the communication device 12 and the portable terminal 30.

Although the above-described display system 2 is configured by the meter display device 13 and the communication device 12 which are two separate modules, the configuration of the display system 2 according to the embodiment is not limited to the above one. For example, the display system 2 may be implemented as a single module that is equipped with a communication unit, a display unit, and an input/output interface or three or more separate modules.

### DESCRIPTION OF REFERENCE NUMERALS

1: straddled vehicle (vehicle)
2: Display system
3: Handle switch
4: Vehicle control unit
5: Vehicle speed sensor
6: Drive source
7: Drive source rotation speed sensor
8: Coolant temperature sensor
9: Fuel gauge sensor
12: Communication device
13: Meter display device
20: Display unit
22: Communication unit
23: Input/output interface
24: Control unit
26: Control unit
27: Input/output interface
30: Portable terminal
50: IP network
60: External server
100: Meter display picture
120: Tachometer
121, 121a: Speedometer
122, 122a: Coolant temperature meter
123, 123a: Residual fuel meter
124: Status bar icon
128, 128a: Drive mode display mark
130: Launcher display picture
132a, 132b, 132c: Icon
140: Meter/infotainment display picture (display picture)
160: Communication error display picture

## Claims

1. A display system (2) configured to be installed in a straddled vehicle (1), the display system (2) comprising:
a display unit (20); and
a communication unit (22) configured to be communicably connectable to a portable terminal (30),
wherein the display system is configured to:
change information displayed on the display unit (20) in response to a press operation performed by a rider on a first switch (31), wherein the first switch (31) is used to operate the display unit (20);
switch a display mode of the display unit (20) from a first display mode to a second display mode or from the second display mode to the first display mode in response to a press operation performed by the rider on the first switch (31);
display a meter display picture (100) representing running information of the vehicle (1) on the display unit (20) in the first display mode; and
display running information of the vehicle (1) in a first display area (S1) of the display unit (20) and display infotainment information transmitted from the portable terminal (30) in a second display area (S2) of the display unit (20) in the second display mode, and
wherein the meter display picture (100) is larger in area than the first display area (S1), **characterized by**
the display system being configured to:
change information displayed on the display unit (20) in response to a short press operation performed by a rider on the first switch (31), wherein the first switch (31) is adapted to be provided in a handle switch (3) of the straddled vehicle (1);
switch a display mode of the display unit (20) from the first display mode to the second display mode or from the second display mode to the first display mode in response to one long press operation performed by the rider on the first switch (31).

2. The display system (2) according to claim 1, **characterized in that** the second display area (S2) is larger than the first display area (S1).

3. The display system (2) according to claim 1 or 2, **characterized in that** at least a portion of the first display area (S1) is located over the second display area (S2) in a vertical direction (D2) of the display unit (20).

4. The display system (2) according to any one of claims 1 to 3, **characterized in that** the first display area (S1) surrounds the second display area (S2).

5. The display system (2) according to any one of claims 1 to 4, **characterized in that** a speed display region of the meter display picture (100), where speed information of the vehicle (1) is displayed, is the same in a display position in a horizontal direction (D1) of the display unit (20) as a speed display region of the first display area (S1), where speed information of the vehicle (1) is displayed.

6. The display system (2) according to any one of claims 1 to 5, **characterized in that** the infotainment information includes at least one of map information, musical information, message information, and weather information.

7. The display system (2) according to any one of claims 1 to 6, **characterized in that** the display system (2) is configured to display communication error information in the second display area (S2) when the display system cannot communicate with the portable terminal (30).

8. The display system (2) according to any one of claims 1 to 7, **characterized in that** the display system (2) is configured by a meter display device (13) and a communication device (12) which are separated from each other,
the meter display device (13) comprises the display unit (20),
the communication device (12) comprises the communication unit (22) and an image transmission unit (24) configured to send image data to be displayed in the second display area (S2) to the display unit (20), and
the meter display device (13) and the communication device (12) are physically connected to each other by a video signal cable.

9. A straddled vehicle comprising the display system according to any one of claims 1 to 8.

## Patentansprüche

1. Ein Anzeigesystem (2), das konfiguriert ist, um in einem Spreiz-Sitz-Fahrzeug (1) installiert zu werden, das Anzeigesystem (2) umfasst:
eine Anzeigeeinheit (20); und
eine Kommunikationseinheit (22), die konfiguriert ist, um kommunikativ mit einem tragbaren Endgerät (30) verbindbar zu sein,
wobei das Anzeigesystem konfiguriert ist, zum:
Ändern der Informationen, die auf der Anzeigeeinheit (20) angezeigt sind, als Reaktion auf einen Drückvorgang, der von einem Fahrer auf einen ersten Schalter (31) ausgeführt ist, wobei der erste Schalter (31) zur Bedienung der Anzeigeeinheit (20) verwendet wird;
Umschalten eines Anzeigemodus der Anzeigeeinheit (20) von einem ersten Anzeigemodus auf einen zweiten Anzeigemodus oder von dem zweiten Anzeigemodus auf den ersten Anzeigemodus als Reaktion auf einen Drückvorgang, der vom Fahrer auf den ersten Schalter (31) ausgeführt ist;
Anzeigen eines Zähleranzeigebildes (100), das Fahrinformationen des Fahrzeugs (1) darstellt, auf der Anzeigeeinheit (20) im ersten Anzeigemodus; und
Anzeigen von Fahrinformationen des Fahrzeugs (1) in einem ersten Anzeigebereich (S1) der Anzeigeeinheit (20) und Anzeigen von Infotainment-Informationen, die von dem tragbaren Endgerät (30) übertragen sind, in einem zweiten Anzeigebereich (S2) der Anzeigeeinheit (20) im zweiten Anzeigemodus, und
wobei das Zähleranzeigebild (100) flächenmäßig größer ist als der erste Anzeigebereich (S1), **gekennzeichnet durch**
dass das Anzeigesystem konfiguriert ist, zum:
Ändern der Informationen, die auf der Anzeigeeinheit (20) angezeigt sind, als Reaktion auf einen kurzen Drückvorgang, der von einem Fahrer auf den ersten Schalter (31) durchgeführt ist, wobei der erste Schalter (31) ausgebildet ist, um in einem Griffschalter (3) des Spreiz-Sitz-Fahrzeugs (1) vorgesehen zu sein;
Umschalten eines Anzeigemodus der Anzeigeeinheit (20) von dem ersten Anzeigemodus auf den zweiten Anzeigemodus oder von dem zweiten Anzeigemodus auf den ersten Anzeigemodus als Reaktion auf einen langen Drückvorgang des Fahrers auf den ersten Schalter (31).

2. Das Anzeigesystem (2) gemäß Anspruch 1, **dadurch gekennzeichnet, dass** der zweite Anzeigebereich (S2) größer ist als der erste Anzeigebereich (S1).

3. Das Anzeigesystem (2) gemäß Anspruch 1 oder 2, **dadurch gekennzeichnet, dass** zumindest ein Abschnitt des ersten Anzeigebereichs (S1) über dem zweiten Anzeigebereich (S2) in einer vertikalen Richtung (D2) der Anzeigeeinheit (20) angeordnet ist.

4. Das Anzeigesystem (2) gemäß irgendeinem der Ansprüche s 1 bis 3, **dadurch gekennzeichnet, dass** der erste Anzeigebereich (S1) den zweiten Anzeigebereich (S2) umgibt.

5. Das Anzeigesystem (2) gemäß irgendeinem der Ansprüche 1 bis 4, **dadurch gekennzeichnet, dass** ein Geschwindigkeitsanzeigebereich des Zähleranzeigebildes (100), in dem Geschwindigkeitsinformationen des Fahrzeugs (1) angezeigt werden, in einer Anzeigeposition in einer horizontalen Richtung (D1) der Anzeigeeinheit (20) derselbe ist wie ein Geschwindigkeitsanzeigebereich des ersten Anzeigebereichs (S1), in dem Geschwindigkeitsinformationen des Fahrzeugs (1) angezeigt werden.

6. Das Anzeigesystem (2) gemäß irgendeinem der Ansprüche 1 bis 5, **dadurch gekennzeichnet, dass** die Infotainment-Informationen zumindest eine der Karteninformationen, Musikinformationen, Nachrichteninformationen und Wetterinformationen enthalten.

7. Das Anzeigesystem (2) gemäß irgendeinem der Ansprüche 1 bis 6, **dadurch gekennzeichnet, dass** das Anzeigesystem (2) konfiguriert ist, um Kommunikationsfehlerinformationen in dem zweiten Anzeigebereich (S2) anzuzeigen, wenn das Anzeigesystem nicht mit dem tragbaren Endgerät (30) kommunizieren kann.

8. Das Anzeigesystem (2) gemäß irgendeinem der Ansprüche 1 bis 7, **dadurch gekennzeichnet, dass** das Anzeigesystem (2) durch eine Zähleranzeigevorrichtung (13) und eine Kommunikationsvorrichtung (12), die voneinander getrennt sind, konfiguriert ist,
die Zähleranzeigevorrichtung (13) die Anzeigeeinheit (20) umfasst,
die Kommunikationsvorrichtung (12) die Kommunikationseinheit (22) und eine Bildübertragungseinheit (24) umfasst, die konfiguriert ist, um Bilddaten, die in dem zweiten Anzeigebereich (S2) angezeigt werden sollen, an die Anzeigeeinheit (20) zu senden, und
die Zähleranzeigevorrichtung (13) und die Kommunikationsvorrichtung (12) physisch durch ein Videosignalkabel miteinander verbunden sind.

9. Ein Spreiz-Sitz-Fahrzeug, welches das Anzeigesystem gemäß irgendeinem der Ansprüche 1 bis 8 umfasst.

## Revendications

1. Système d'affichage (2) configuré pour être installé sur un véhicule à enfourcher (1), le système d'affichage (2) comprenant :
une unité d'affichage (20) ; et
une unité de communication (22) configurée pour être connectable en communication à un terminal portable (30),
dans lequel l'unité d'affichage est configurée pour :
changer des informations affichées sur l'unité d'affichage (20) en réaction à une opération de pression exécutée par un conducteur sur un premier commutateur (31), dans lequel le premier commutateur (31) est utilisé pour faire fonctionner l'unité d'affichage (20) ;
commuter un mode d'affichage de l'unité d'affichage (20) d'un premier mode d'affichage vers un deuxième mode d'affichage ou du deuxième mode d'affichage vers le premier mode d'affichage en réaction à une opération de pression exécuté par le conducteur sur le premier commutateur (31) ;
afficher une image d'affichage de mesures (100) représentant des informations de fonctionnement du véhicule (1) sur l'unité d'affichage (20) dans le premier mode d'affichage ; et
afficher des informations de fonctionnement du véhicule (1) dans une première zone d'affichage (S1) de l'unité d'affichage (20) et afficher des informations d'infodivertissement transmises depuis le terminal portable (30) dans une deuxième zone d'affichage (S2) de l'unité d'affichage (20) dans le deuxième mode d'affichage, et
dans lequel l'image d'affichage de mesures (100) est plus grande en surface que la première zone d'affichage (S1), **caractérisé par**
le système d'affichage configuré pour :
changer des informations affichées sur l'unité d'affichage (20) en réaction à une brève opération de pression exécutée par un conducteur sur le premier commutateur (31), dans lequel le premier commutateur (31) est adapté pour être disposé sur un commutateur de poignée du véhicule à enfourcher (1) ;
commuter un mode d'affichage de l'unité d'affichage (20) du premier mode d'affichage vers le deuxième mode d'affichage ou du deuxième mode d'affichage vers le premier mode d'affichage en réaction à une longue opération de pression exécuté par le conducteur sur le premier commutateur (31).

2. Le système d'affichage (2) selon la revendication 1, **caractérisé en ce que** la deuxième zone d'affichage (S2) est plus grande que la première zone d'affichage (S1).

3. Le système d'affichage (2) selon la revendication 1 ou 2, **caractérisé en ce que** au moins une partie de la première zone d'affichage (S1) est située par-dessus la deuxième zone d'affichage (S2) dans une direction verticale (D2) de l'unité d'affichage (20).

4. Le système d'affichage (2) selon l'une quelconque des revendications 1 à 3, **caractérisé en ce que** la première zone d'affichage (S1) entoure la deuxième zone d'affichage (S2).

5. Le système d'affichage (2) selon l'une quelconque des revendications 1 à 4, **caractérisé en ce que** une zone d'affichage de vitesse de l'image d'affichage de mesures (100), où des informations de vitesse du véhicule (1) sont affichées, est la même dans une position d'affichage dans une direction horizontale (D1) de l'unité d'affichage (20) qu'une zone d'affichage de vitesse de la première zone d'affichage (S1), où des informations de vitesse du véhicule (1) sont affichées.

6. Le système d'affichage (2) selon l'une quelconque des revendications 1 à 5, **caractérisé en ce que** les informations d'infodivertissement incluent au moins une d'informations cartographiques, d'informations musicales, d'informations de message et d'informations météorologiques.

7. Le système d'affichage (2) selon l'une quelconque des revendications 1 à 6, **caractérisé en ce que** le système d'affichage (2) est configuré pour afficher des informations d'erreur de communication dans la deuxième zone d'affichage (S2) lorsque le système d'affichage ne peut pas communiquer avec le terminal portable (30).

8. Le système d'affichage (2) selon l'une quelconque des revendications 1 à 7, **caractérisé en ce que** le système d'affichage (2) est configuré par un dispositif d'affichage de mesures (13) et un dispositif de communication (12) qui sont séparés l'un de l'autre,
le dispositif d'affichage de mesures (13) comprend l'unité d'affichage (20),
le dispositif de communication (12) comprend l'unité de communication (22) et une unité de transmission d'image (24) configurée pour envoyer des données d'image à afficher dans la deuxième zone d'affichage (S2) à l'unité d'affichage (20), et
le dispositif d'affichage de mesures (13) et le dispositif de communication (12) sont physiquement connectés l'un à l'autre par un câble de signal vidéo.

9. Véhicule à enfourcher comprenant le système d'affichage selon l'une quelconque des revendications 1 à 8.
